**Europäisches Patentamt**

**European Patent Office**

**Office européen des brevets**

(11) Veröffentlichungsnummer: **0 218 021**
**B1**

(12) **EUROPÄISCHE PATENTSCHRIFT**

(45) Veröffentlichungstag der Patentschrift:
08.06.88

(51) Int. Cl.⁴: **B 64 C 13/26**, B 64 C 13/50

(21) Anmeldenummer: **86109811.9**

(22) Anmeldetag: **17.07.86**

(54) Klappenanordnung für einen Flugzeugtragflügel.

(30) Priorität: **29.08.85 DE 3530864**
**26.06.86 DE 3621401**

(43) Veröffentlichungstag der Anmeldung:
**15.04.87 Patentblatt 87/16**

(45) Bekanntmachung des Hinweises auf die Patenterteilung:
**08.06.88 Patentblatt 88/23**

(84) Benannte Vertragsstaaten:
**FR GB IT NL**

(56) Entgegenhaltungen:
**EP-A-0 042 653**
**DE-A-3 114 143**
**FR-A-2 101 001**

(73) Patentinhaber: **Messerschmitt- Bölkow- Blohm GmbH, Hünefeldstrasse 1-5, D-2800 Bremen 1 (DE)**

(72) Erfinder: **Renken, Jürgen, Dr.- Ing., Nr. 12, D-2730 Freyersen (DE)**
Erfinder: **Martens, Wilhelm, Dipl.- Ing., Brinkumer Strasse 3, D-2870 Delmenhorst (DE)**

## Beschreibung

Die Erfindung betrifft eine Klappenanordnung für einen Flugzeugtragflügel, bestehend aus jeweils wenigstens einer an der Tragflügelhinterkante angeordneten und in bezug auf diese ausfahrbaren Hochauftriebsklappe, wenigstens einem der Hochauftriebsklappe zugeordneten Spoiler sowie je einer auf die Hochauftriebsklappe und einer auf den Spoiler wirkenden Stelleinrichtung, wobei der Spoiler der Hochauftriebskappe derart zugeordnet ist, daß er bei Verschwenkung der Hochauftriebsklappe dieser im Sinne der Vermeidung einer Spaltbildung zwischen Hochauftriebsklappe und Spoiler folgt.

Bei der aus der GB-A-1 568 250 bekannten Klappenanordnung wird die Hochauftriebsklappe bzw. der Spoiler durch die ihnen zugeordneten Stelleinrichtungen aus ihrer jeweiligen Ruhelage in die jeweils vorgesehene ausgefahrene Position bzw. aus dieser wieder zurück in die Ruhelage gebracht. Darüber hinaus sind, beispielsweise aus der DE-C-2 725 632, Klappenanordnungen bekannt, bei denen zur Regulierung der beim Verschwenken einer Hinterkantenklappe entstehenden Spaltströmung eine zusätzliche Hilfsklappe vorgesehen ist, deren Betätigungseinrichtung auf mechanischem Wege mit der Kinematik der Hinterkantenklappe gekoppelt ist.

Während diese bekannten Klappensysteme im allgemeinen in der Reiseflugphase des Flugzeuges in vollständig eingefahrenem Zustand den rückwärtigen Abschluß der gleichsam festen Flügelkontur bilden, ist in der DE-A-3 114 143, die die Merkmale nach dem Oberbegriff des Auspruchs 1 zeigt, ein Verfahren vorgeschlagen worden, das der Optimierung des Reiseflugzustandes von Flugzeugen mit insbesondere transsonischen Tragflügeln dient und bei dem auch während der Reiseflugphase die Wölbung des Tragflügels variiert wird.

Das Ausmaß und die Art der Variation hängen dabei unter anderem von den aktuellen Flugparametern wie Gewicht, Geschwindigkeit und Flughöhe ab. Zur Realisierung der Wölbungsänderung werden bei diesem bekannten Verfahren die für den Niedergeschwindigkeitsbereich bzw. für die Lagesteuerung des Flugzeuges vorgesehenen Klappen- und Spoilersysteme verwendet.

Ferner ist im Zusammenhang mit diesem bekannten Verfahren vorgeschlagen worden, daß die Spoiler, die gegebenenfalls biegeflexibel ausgebildet sein können, unter Vorspannung dicht auf den jeweiligen zugeordneten Hochauftriebsklappe aufliegen. Durch diese Maßnahme wird erreicht, daß die Spoiler bei einer Wölbungsänderung in der Reiseflugphase die durch ein Verschwenken der Hochauftriebsklappen bewirkt wird, zwangsläufig dem Klappenausschlag folgen und somit ein vollständiger Konturausgleich gewährleistet ist und insbesondere eine Spaltbildung zwischen der Hochauftriebsklappe und dem Spoiler vermieden wird.

Aufgabe der Erfindung ist es in diesem Zusammenhang, eine Klappenanordnung zu schaffen, bei der ein derartiger Konturausgleich auf eine andere als die vorstehend beschriebene Weise herbeigeführt wird, die aber dennoch keinen größeren konstruktiven Aufwand erfordert.

Die Erfindung löst diese Aufgabe, indem sie eine Klappenanordnung der eingangs genannten Art mit den kennzeichnenden Merkmalen des Patentanspruchs 1 vorsieht. Die erfindungsgemäße Klappenanordnung hat dabei den Vorteil, daß im wesentlichen unter Verwendung der konventionellen Stell- und Regeleinrichtungen für die Hochauftriebsklappe einerseits und den Spoiler andererseits ein System geschaffen wird, durch das bei Wölbungsveränderungen des Tragflügels in der Reiseflugphase infolge der vom Kopplungselement bewirkten automatischen Nachführung des Spoilers jederzeit ein vollständiger Konturausgleich sichergestellt ist. Da auf diese Weise verhindert wird, daß auf die Struktur des Spoilers zusätzliche Kräfte einwirken, wie sie beispielsweise bei einem Einbau unter Vorspannung auftreten können, werden weitergehende Anforderungen hinsichtlich der werkstoffmechanischen Eigenschaften des Spoilers vermieden. Die erfindungsgemäße Klappenanordnung ist daher insbesondere auch für einen nachträglichen Einbau in vorhandene Hinterklappensysteme hervorragend geeignet.

Im folgenden soll die Erfindung anhand eines in der Zeichnung dargestellten Ausführungsbeispieles näher erläutert werden. Dabei zeigen in jeweils schematischer Darstellung:

Fig.1 eine Draufsicht auf einen Teil einer Tragfläche eines transsonischen Tragflügels,

Fig. 2 einen Schnitt durch die Anordnung gemäß Fig. 1 in schematischer Darstellung,

Fig. 3 eine weitere Draufsicht auf einen Teil einer Tragfläche eines transsonischen Tragflügels,

Fig. 4 einen Schnitt durch die Anordnung gemäß Fig. 3 in schematischer Darstellung und

Fig.5 eine vergrößerte Darstellung des in Fig. 4 gekennzeichneten Bereichs.

In den Figuren sind gleiche bzw. einander entsprechende Bauteile mit den gleichen Bezugszeichen versehen.

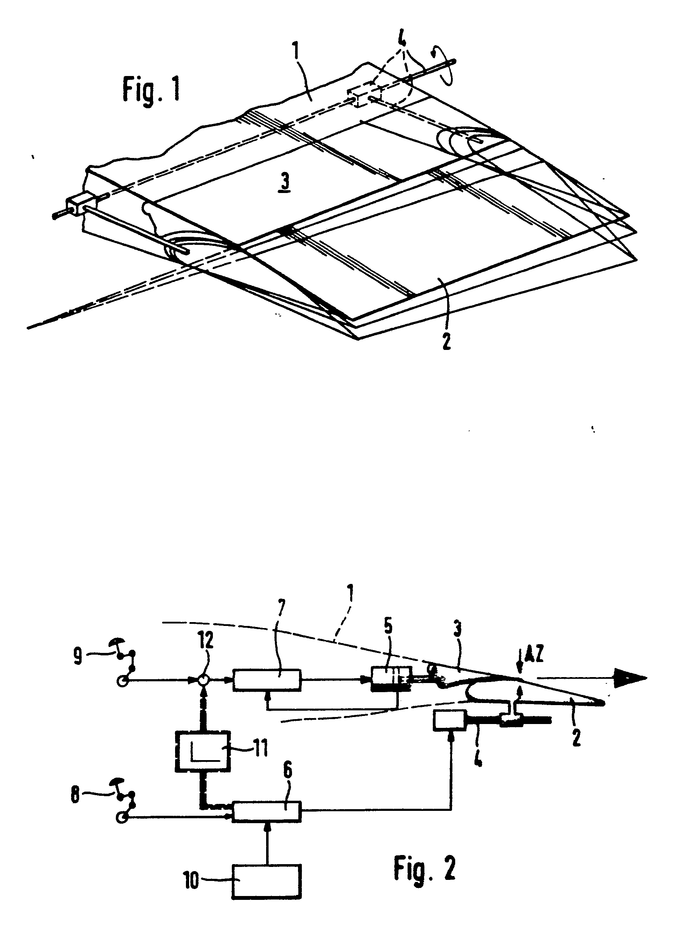

Bei der in Fig. 1 dargestellten Anordnung handelt es sich um einen Ausschnitt aus dem Hinterkantenbereich eines transsonischen Tragflügels 1, an dem eine Hochauftriebsklappe 2 sowie ein Spoiler 3 angeordnet sind. In der in dieser Fig. dargestellten Reiseflugkonfiguration liegt der Spoiler 3 dabei dicht, d.h. ohne Spalt, auf der zugeordneten Hochauftriebsklappe 2 auf. Wie in Fig. 1 ferner gezeigt ist, ist der Hochauftriebsklappe 2 eine hier nur andeutungsweise dargestellte Stelleinrichtung 4 zugeordnet, mittels derer ihre Position in bezug auf den Tragflügel definiert veränderbar ist.

Weitere Einzelheiten hinsichtlich der Ansteuerung des Klappensystems sind in Fig. 2 dargestellt. In dieser Fig. ist die äußere Kontur des Tragflügels 1 durch eine gestrichelte Linie angedeutet. Neben der auf die Hochauftriebsklappe 2 wirkenden Stelleinrichtung 4 ist eine weitere auf den Spoiler 3 wirkende Stelleinrichtung 5 dargestellt. Letztere besteht im Fall des hier dargestellten Ausführungsbeispiels der Erfindung aus einem hydraulischen Kolbensystem, während in diesem Fall die Stelleinrichtung 4 für die Hochauftriebsklappe 2 als mechanische Antriebseinheit mit einem Spindelgetriebe ausgebildet ist. Beide Stelleinrichtungen können jedoch innerhalb des Rahmens der Erfindung beliebig ausgebildet sein.

Wie weiterhin aus Fig. 2 hervorgeht, sind den beiden Stelleinrichtungen 4 und 5 jeweils separate Steuer- und Regeleinrichtungen 6 bzw. 7 vorgeschaltet, die auf die zugehörigen Stelleinrichtungen 4 bzw. 5 wirken. Zur Betätigung dieser Steuer- und Regeleinrichtungen 6 und 7 in der Start- und Landephase sind zwei im Cockpit angeordnete Betätigungshebel 8 und 9 vorgesehen, mittels derer die Positionen der Hochauftriebsklappe 2 bzw. des Spoilers 3 in bekannter Weise unabhängig voneinander eingestellt werden können.

Zusätzlich zu diesen Kontrolleinrichtungen ist die Steuer- und Regeleinrichtung 6 für die Hochauftriebsklappe 2 mit einem Rechnersystem 10 verbunden. Dieses ermittelt während der Reiseflugphase anhand der aktuellen Parameter wie Flughöhe, Geschwindigkeit und Gewicht des Flugzeuges diejenige Profilwölbung, die eine optimale aerodynamische Effektivität des Tragflügels in dieser Flugphase gewährleistet und setzt dies in entsprechende Steuersignale um, die an die Steuer- und Regeleinrichtung 6 für die Hochauftriebsklappe 2 weitergegeben werden.

Schließlich ist entsprechend der Erfindung zwischen den Steuer- und Regeleinrichtungen 6 und 7 ein Kopplungselement 11 in Form eines elektronischen Interfaces angeordnet. Der Eingang dieses Interfaces 11 ist mit einem Signalausgang der Steuer- und Regeleinrichtung 6 für die Hochauftriebsklappe 2 verbunden; sein Ausgang ist über einen zusätzlichen Summenpunkt 12 auf den Eingang der Steuer- und Regeleinrichtung 7 für den Spoiler 3 geführt.

Dieses Interface 11 enthält im Fall der hier beschriebenen Ausführungsbeispiele der Erfindung in Form eines Polynoms, Informationen über den geometrischen Zusammenhang des Ausfahrweges der Hochauftriebsklappe 2 einerseits und der Weite AZ des zwischen dieser Klappe 2 und dem Spoiler 3 entstehenden Spaltes beim Verfahren der Klappe andererseits.

Die Wirkungsweise der erfindungsgemäßen Klappenanordnung ist wie folgt:

Während in der Start- und Landephase des Flugzeuges die von der Hochauftriebsklappe 2 und vom Spoiler 3 vorwiegend auf konventionelle Weise, das heißt, unabhängig voneinander durch Betätigen der entsprechenden Hebel 8 bzw. 9 erfolgt, wird die Position der Hochauftriebsklappe 2 in der Reiseflugphase vom Rechnersystem 10 kontrolliert. Dieses übermittelt an die Steuer- und Regeleinrichtung 6 diejenigen Steuersignale, die erforderlich sind, um die Hochauftriebsklappe 2 in eine Position zu verfahren, die der vom Rechnersystem 10 für die aktuelle Flugsituation ermittelten optimalen Profilwölbung entspricht. Dies führt dazu, daß die Hochauftriebsklappe 2 mittels der Stelleinrichtung 4 beispielsweise in eine der in Fig. 1 angedeuteten Positionen verfahren wird.

Das Interface 11 errechnet seinerseits anhand der im Ausgangssignal der Steuer- und Regeleinrichtung 6 enthaltenen Informationen über die Position der Hochauftriebsklappe 2 sowie anhand des gespeicherten geometrischen Zusammenhangs zwischen Klappenstellung und Spaltweite AZ nunmehr unmittelbar eine der errechneten Spaltweite proportionales Offset-Signal, das am Summenpunkt 12 in den Regelkreis für die Spoiler-Ansteuerung eingesetzt wird. Dieses Offset-Signal bewirkt eine Nachführung des Spoilers 3 in eine solche Position, bei der derjenige Zustand wiederhergestellt wird, der vor dem Verfahren der Hochauftriebsklappe 2 herrschte, das heißt, bei der der Spoiler 3 ohne Zwischenspalt auf der Hochauftriebsklappe 2 aufliegt.

Es sei noch angemerkt, daß die erfindungsgemäße Klappenanordnung selbstverständlich auch solche Systeme umfaßt, bei denen, anders als in dem zuvor beschriebenen Ausführungsbeispiel der Erfindung, die Funktion der Betätigungshebel 8 und 9 ganz bzw. teilweise von einem automatischen Flugzeugführungssystem übernommen wird.

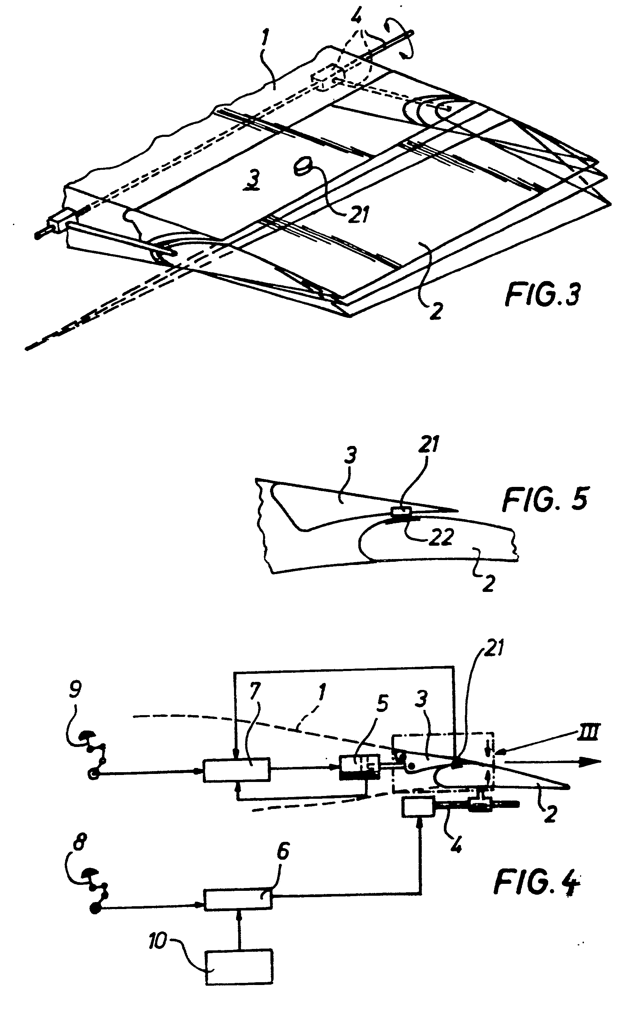

Bei einem weiteren Ausführungsbeispiel der Erfindung, wie in der in Fig. 3 dargestellten Anordnung, handelt es sich ebenfalls um einen Ausschnitt aus dem Hinterkantenbereich eines transsonischen Tragflügels 1, an dem eine Hochauftriebsklappe 2 sowie ein Spoiler 3 angeordnet sind. In der in dieser Fig. dargestellten Reiseflugkonfiguration liegt der Spoiler 3 dabei dicht, das heißt ohne Spalt, auf der zugeordneten Hochauftriebsklappe 2 auf. Wie in Fig. 3 ferner gezeigt, ist der Hochauftriebsklappe 2 eine hier nur andeutungsweise dargestellte Stelleinrichtung 4 zugeordnet, mittels derer ihre Position in bezug auf den Tragflügel definiert veränderbar ist.

Weitere Einzelheiten hinsichtlich der Ansteuerung des Klappensystems sind in Fig. 4 dargestellt. In dieser Fig. ist die äußere Kontur des Tragflügels 1 durch eine gestrichelte Linie angedeutet. Neben der auf die Hochauftriebsklappe 2 wirkenden Stelleinrichtung 4 ist eine weitere auf den Spoiler 3 wirkende Stelleinrichtung 5 dargestellt. Letztere besteht im Fall des hier dargestellten Ausführungsbeispiels der Erfindung aus einem hydraulischen Kolbensystem, während in diesem Fall die Stelleinrichtung 4 für die Hochauftriebsklappe 2 als mechanische Arbeitseinheit mit einem Spindelgetriebe ausgebildet ist. Beide Stelleinrichtungen können jedoch innerhalb des Rahmens der Erfindung beliebig ausgebildet sein.

Wie weiterhin aus Fig. 4 hervorgeht, sind den beiden Stelleinrichtungen 4 und 5 jeweils separate Steuer- und Regeleinrichtungen 6 bzw. 7 vorgeschaltet, die auf die zugehörigen Stelleinrichtungen 4 bzw. 5 wirken. Zur Betätigung dieser Steuer- und Regeleinrichtungen 6 und 7 in der Start- und Landephase sind zwei im Cockpit angeordnete Betätigungshebel 8 und 9 vorgesehen, mittels derer die Positionen der Hochauftriebsklappe 2 bzw. des Spoilers 3 in bekannter Weise unabhängig voneinander eingestellt werden können.

Zusätzlich zu diesen Kontrolleinrichtungen ist die Steuer- und Regeleinrichtung 6 für die Hochauftriebsklappe 2 mit einem Rechnersystem 10 verbunden. Dieses ermittelt während der Reiseflugphase anhand der aktuellen Parameter wie Flughöhe, Geschwindigkeit und Gewicht des Flugzeuges diejenige Profilwölbung, die eine optimale aerodynamische Effektivität des Tragflügels in dieser Flugphase gewährleistet und setzt dies in entsprechende Steuersignale um, die an die Steuer- und Regeleinrichtung 6 für die Hochauftriebsklappe 2 weitergegeben werden. ·

Schließlich ist entsprechend der Erfindung der Steuer- und Regeleinrichtung 7 ein Kopplungselement in Form eines Annäherungssensors 21 zugeordnet. Der Signalausgang dieses Annäherungssensors 21 ist auf den Eingang der Steuer- und Regeleinrichtung 7 für den Spoiler 3 geführt.

Wie dabei aus den Fig. 3 bis 5 ersichtlich ist, ist der Annäherungssensor 21 bei dem hier dargestellten Ausführungsbeispiel der Erfindung am Spoiler 3 angeordnet und auf den dem Spoiler 3 gegenüberliegenden Bereich 22 der Hochauftriebsklappe 2 ausgerichtet. Dieser Bereich 22 kann dabei zur Optimierung der Wirkung des Annäherungssensors 21 zusätzlich mit einer geeigneten Verkleidung bzw. Beschichtung versehen sein. Es sei an dieser Stelle angemerkt, daß die Anordnung der Teile 21 und 22 selbstverständlich auch vertauscht, das heißt der Annäherungssensor 21 an der Hochauftriebsklappe 2 und der Bereich 22 am Spoiler 3 angeordnet sein kann. Auch in diesem Fall wäre jedoch der Signalausgang des Annäherungssensors 21 mit dem Eingang der Steuer- und Regeleinrichtung 7 für den Spoiler 3 verbunden.

Die Wirkungsweise der erfindungsgemäßen Klappenanordnung ist wie folgt:

Während der Start- und Landephase des Flugzeuges, die von der Hochauftriebsklappe 2 und vom Spoiler 3 vorwiegend auf konventionelle Weise, das heißt unabhängig voneinander durch Betätigen der entsprechenden Hebel 8 bzw. 9 erfolgt, wird die Position der Hochauftriebsklappe 2 in der Reiseflugphase vom Rechnersystem 10 kontrolliert. Dieses übermittelt an die Steuer- und Regeleinrichtung 6 diejenigen Steuersignale, die erforderlich sind, um die Hochauftriebsklappe 2 in eine Position zu verfahren, die der vom Rechnersystem optimalen Profilwölbung entspricht. Dies führt dazu, daß die Hochauftriebsklappe 2 mittels der Stelleinrichtung 4 beispielsweise in eine der in Fig. 3 angedeuteten Positionen verfahren wird.

Der Annäherungssensor 21 signalisiert seinerseits der 30 Steuer- und Regeleinrichtung 6 Informationen über den Abstand zur Hochauftriebsklappe 2. Die Signale können dabei sowohl als elektrische wie auch als optische Signale übermittelt werden. Dieses Signal bewirkt eine Nachführung des Spoilers 3 in eine solche Position, bei der derjenige Zustand wiederhergestellt wird, der vor dem Verfahren der Hochauftriebsklappe 2 herrschte.

Abschließend sei angemerkt, daß auch dieses Ausführungsbeispiel der Erfindung solche Systeme mit umfaßt, bei denen, anders als in dem vorstehend beschriebenen Klappensystem, die Funktion der Betätigungshebel 8 und 9 ganz bzw. teilweise von einem automatischen Flugführungssystem übernommen wird. Ferner können, insbesondere bei Klappensystemen mit biegeflexiblem Spoiler, mehrere Annäherungssensoren 21 an einer Klappe angeordnet sein.

**Patentansprüche**

1. Klappenanordnung für einen Flugzeugtragflügel, bestehend aus jeweils wenigstens einer an der Tragflügelhinterkante angeordneten und in bezug auf diese ausfahrbaren Hochauftriebsklappe (2), wenigstens einem der Hochauftriebsklappe zugeordneten Spoiler (3), sowie je einer auf die Hochauftriebsklappe und einer auf den Spoiler wirkenden Stelleinrichtung (4; 5) wobei der Spoiler der Hochauftriebsklappe derart zugeordnet ist, daß er bei Verschwenkung der Hochauftriebsklappe dieser im Sinne der Vermeidung einer Spaltbildung zwischen Hochauftriebsklappe und Spoiler folgt,

dadurch gekennzeichnet daß zwischen einer auf die Stelleinrichtung (4) für die Hochauftriebsklappe (2) wirkenden Steuer- und Regeleinwirkung (6) einerseits und einer auf die Stelleinrichtung (5) für den Spoiler (3) wirkenden Steuer- und Regeleinrichtung (7) andere seits ein Kopplungselenent (11) zur selbsttätigen Nachführung des Spoilers angeordnet ist, dessen Signaleingang mit der Steuer- und Regeleinrichtung (6) für die Hochauftriebsklappe (2) verbunden ist und dessen Signalausgang auf den Eingang der Steuer- und Regeleinrichtung (7) für den Spoiler (3) geführt ist.

2 . Klappenanordnung nach Anspruch 1, dadurch gekennzeichnet, daß im Kopplungselement (11) Informationen über den geometrischen Zusammenhang zwischen dem Ausfahrweg der Hochauftriebsklappe (2) und der Breite des dadurch zwischen dem Spoiler (3) und der Hochauftriebsklappe (2) entstehenden Luftspaltes gespeichert und in ein elektrisches Signal umwandelbar sind.

3. Klappenanornung nach Anspruch 2, dadurch gekennzeichnet, daß das Kopplungselement (11) als elektronisches Interface ausgebildet ist, in dem der geometrische Zusammenhang zwischen Klappenweg einerseits und Spaltbreite andererseits in Form eines Polynoms gespeichert ist.

4. Klappenanordnung nach Anspruch 2 oder 3, dadurch gekennzeichnet, daß das Ausgangssignal des Kopplungselementes (11) als Offset-Signal in den Eingangskreis der Steuer- und Regelanordnung (7) für den Spoiler (3) eingespeist ist.

5. Klappenanordnung nach Anspruch 1, dadurch gekennzeichnet, daß das Kopplungselement als Annäherungssensor (21) ausgebildet und im Bereich des von der Hochauftriebsklappe (2) und dem Spoiler (3) gebildeten Spaltes an einer der beiden Klappen (2, 3) angeordnet ist.

6. Klappenanordnung nach Anspruch 5, dadurch gekennzeichnet daß der Annäherungssensor (21) so ausgebildet ist, daß die Information über den Abstand zwischen der Hochauftriebsklappe (2) und den Spoiler (3) als elektrisches Ausgangssignal vorliegt.

7. Klappenanordnung nach Anspruch 5, dadurch gekennzeichnet, daß der Annäherungssensor (21) so ausgebildet ist, daß die Information über den Abstand zwischen der Hochauftriebsklappe (2) und dem Spoiler (3) als optisches Ausgangssignal vorliegt.

8. Klappenanordnung nach einem der Ansprüche 5 bis 7, dadurch gekennzeichnet, daß mehrere Annäherungssensoren (21) im Abstand voneinander über die Breite der jeweiligen Klappe (2, 3) verteilt angeordnet sind.

## Claims

1. A flap arrangement for an aircraft airfoil, comprising at least one high-lift flap (2) located on the airfoil trailing edge, being extendable from this, and at least one spoiler (3), associated with the said high-lift flap, and servo units (4, 5) which act on the high-lift flap and spoiler respectively, whereby the spoiler is so arranged relative to the high-lift flap that when the high-lift flap swivels the spoiler follows it to prevent a gap being formed between flap and spoiler, characterised in that there is a coupling element (11) provided for automatically guiding the spoiler, being arranged between a control and regulating system (6) acting on the servo unit (4) for the highlift flap (2) on the one side and a control and regulating system (7) acting on the servo unit (5) for the spoiler (3) on the other side, whereby the signal input of the said coupling element is connected to the control and regulating system (6) for the high-lift flap (2) while its signal output is connected to the input of the control and regulating system (7) for the spoiler (3).

2. A flap arrangement as claimed in Claim 1, characterized in that there are data stored in the coupling element (11), which relate to the geometric relationship between the extension of the high-lift flap (2) and the width of the air gap created between the spoiler (3) and the high-lift flap (2), which data can then be converted into an electrical signal.

3. A flap arrangement as claimed in Claim 2, characterized in that the coupling element (11) is designed as an electronic interface in which is stored the geometric relation of flap travel on the one side and gap width on the other, in the form of a polynomial.

4. A flap arrangement as claimed in Claim 2 or 3, characterized in that the output signal of the coupling element (11) is stored as an offset signal in the input circuit of the control and regulating system (7) for the spoiler (3).

5. A flap arrangement as claimed in Claim 1, characterized in that the coupling element is designed as a proximity sensor and is located on .one of the two flaps (2,3) in the region of the gap that is formed by the high-lift flap (2) and the spoiler (3).

6. A flap arrangement as claimed in Claim 5, characterized in that the proximity sensor (21) is designed so that the information relating to the clearance between the high-lift flap (2) and the spoiler (3) exists in the form of an electrical output signal.

7. A flap arrangement as claimed in Claim 5, characterized in that the proximity sensor (21) is designed so that the information relating to the clearance between the high-lift flap (2) and the spoiler (3) exists as an optical output signal.

8. A flap arrangement as claimed in any one of Claims 5 to 7, characterized in that there are a plurality of proximity sensors (21) arranged at intervals over the width of the respective flap (2, 3).

## Revendications

1. Dispositif de volets d'une aile portante d'avion, dispositif se composant d'au moins un volet hypersustentateur (2) susceptible d'être mis en position de sortie au niveau du bord arrière de l'aile portante et par rapport à celle-ci, d'au moins un aérofrein (3) (Spoiler) associé au volet hypersustentateur ainsi qu'un dispositif de réglage (4, 5) agissant respectivement sur le volet hypersustentateur et sur i'aérofrein, l'aérofrein étant associé au volet hypersustentateur de façon qu'en cas de basculement du volet hypersustentateur, lors du basculement du volet hypersustentateur, l'aérofrein suit celui-ci pour éviter que ne se forme un intervalle entre l'aérofrein et le volet hypersustentateur, dispositif caractérisé en ce qu'entre d'une part un dispositif de commande et de réglage (6) agissant sur le dispositif de positionnement (4) du volet hypersustentateur (2) et d'autre part un dispositif de commande de réglage (7) agissant sur le dispositif de positionnement (5) de l'aérofrein (3), il est prévu un élément de liaison (11) pour asservir automatiquement l'aérofrein, et dont l'entrée des signaux du dispositif de commande et de réglage (6) est appliquée au volet hypersustentateur (2) et la sortie des signaux est reliée à l'entrée du dispositif de commande et de régulation (7) de l'aérofrein (3).

2. Dispositif de volets selon la revendication 1, caractérisé en ce que l'élément de liaison (11) met en mémoire des informations relatives à la relation géométrique entre la course de déploiement du volet hypersustentateur (2) et la largeur de l'intervalle formé entre l'aérofrein (3) et le volet hypersustentateur (2) et transforme cette relation en un signal électrique.

3. Dispositif de volets selon la revendication 2, caractérisé en ce que l'élément de liaison (11) est une interface électronique qui contient en mémoire la relation géométrique entre la course du volet hypersustentateur d'une part et d'autre part la largeur de l'intervalle sous la forme d'un polynôme.

4. Dispositif de volets selon la revendication 2 ou 3, caractérisé en ce que le signal de sortie de l'élément de liaison (11) est enregistré comme signal de décalage du circuit d'entrée du dispositif de commande et de réglage (7) pour l'aérofrein (3).

5. Dispositif de volets selon la revendication 1, caractérisé en ce que l'élément de liaison est en forme de capteur de proximité (21) et est prévu au niveau de l'intervalle formé entre le volet hypersustentateur (2) et l'aérofrein (3), sur l'un des deux éléments (2, 3)

6. Dispositif de volets selon la revendication 5, caractérisé en ce que le capteur de proximité (21) est tel que l'information relative à la distance entre le volet hypersustentateur (2) et l'aerofrein (3) est fournie comme signal de sortie électrique.

7. Dispositif de volets selon la revendication 5, caractérisé en ce que le capteur de proximité (21) est tel que l'information relative à la distance entre le volet hypersustentateur (2) et l'aérofrein (3) est un signal de sortie optique.

8. Dispositif de volets selon l'une quelconque des revendications 5 à 7, caractérisé par plusieurs capteurs de proximité (21) répartis à distance l'un de l'autre sur toute la largeur de chacun des volets (2, 3).

Fig. 1

Fig. 2

FIG.3

FIG. 5

FIG.4